# EUROPÄISCHE PATENTANMELDUNG

(11) **EP 3 594 061 A1**
(43) Veröffentlichungstag der Anmeldung: **15.01.2020**
(21) Anmeldenummer: 19179528.5
(22) Anmeldetag: 11.06.2019
(51) Int. Cl.: B60Q 1/26, B60Q 1/56

(54) **FAHRZEUGBAUTEIL MIT LEUCHTENEINSCHUB SOWIE VERFAHREN ZUR MONTAGE**

(30) Priorität: 09.07.2018 DE 102018211266
(71) Anmelder: Magna Exteriors GmbH, 63877 Sailauf (DE)
(72) Erfinder: VU, Thien Bach Mai, 73732 Esslingen (DE); MOHR, Robert, 71384 Weinstadt (DE)
(74) Vertreter: Rausch, Gabriele

(57) **Zusammenfassung**

Fahrzeugbauteil (3) mit Leuchteneinschub (10), wobei das Fahrzeugteil (3) eine Ausnehmung aufweist und der Leuchteneinschub (10) eine Leuchte und einen Halter (2) aufweist, wobei der Halter (2) in die Ausnehmung des Fahrzeugteils eingepasst wird, wobei der Halter (2) einen Rahmen (5) mit zwei Haltebereichen (2a, 2b) besitzt, wobei der erste Haltebereich sich aus der Ebene des Rahmens (5) heraus erstreckt und der Kontur (3a) des benachbarten Fahrzeugbauteils (3) folgt.

## Beschreibung

Die Erfindung betrifft ein Fahrzeugbauteil mit Leuchteneinschub wobei das Fahrzeugteil eine Ausnehmung und der Leuchteneinschub eine Leuchte und einen Halter aufweist, wobei der Halter in die Ausnehmung des Fahrzeugteils eingepasst wird.

Weiterhin betrifft die Erfindung ein Verfahren zur Montage des Leuchteneinschubs im Fahrzugbauteil.

### Stand der Technik

Leuchten, speziell Kennzeichenbeleuchtungen sind in den unterschiedlichsten Ausführungen bekannt.
Beispielsweise erfolgt die Befestigung des Halters einer Kennzeichenleuchte über Verklipsen mit den umgebenden Bauteilen des Fahrzeugs, wobei die Bauteile aus Kunststoff oder Metall oder Verbundwerkstoffen hergestellt werden können.
Um zu verhindern, dass sich der Halter der Leuchte durch Vibrationen löst oder verschiebt, werden die Verbindungen nach der Montage oftmals verschweißt oder verklebt. Dabei reicht eine partielle Verbindung des Halters mit dem umgebenden Bauteil aus.

Aus der EP 0 820 903 B1 sind Kennzeichenleuchten bekannt, die an der Fahrzeugkarosserie befestigt sind und von einer Abdeckung geschützt werden.

Aus der DE 10 2007 046 197 A1 ist eine stabförmige Kennzeichenleuchte bekannt.

Die DE 91 145 33 U1 zeigt eine Kennzeichenleuchte in einem zweiteiligen Gehäuse, wobei das Gehäuseteil 4 einen Rand aufweist, der in der Ebenen einer rahmenartigen Struktur liegt. Darüber hinaus erstreckt sich eine Anlagefläche der Gehäuses 4 aus der Ebene heraus, die von innen an einen Lichtscheibe angeschmiegt ist.

DE 82 02 901 U1 zeigt eine Kennzeichenleuchte mit Rastnasen am Gehäuse.

Es ist Aufgabe der Erfindung ein Fahrzeugbauteil mit Leuchteneinschub zu entwerfen, bei dem der Leuchteneinschub einfach und sicher ohne weitere Befestigungsschritte eingeschoben wird.
Weiterhin ist die Aufgabe zur Montage des Leuchteneinschubs ein optimiertes Verfahren vorzustellen.

Die Aufgabe wird gelöst mit den Merkmalen eines Fahrzeugbauteils mit Leuchteneinschub, wobei das Fahrzeugteil eine Ausnehmung und der Leuchteneinschub eine Leuchte und einen Halter aufweist, wobei der Halter in die Ausnehmung des Fahrzeugteils eingepasst wird, wobei der Halter einen Rahmen mit zwei Haltebereichen besitzt, wobei der erste Haltebereich sich aus der Ebene des Rahmens heraus erstreckt und der Kontur des benachbarten Fahrzeugbauteils folgt.

Durch die beiden Haltebereiche wird der Leuchteinschub nach dem Einbringen in der Ausnehmung des Fahrzeugbauteils sicher gehalten und braucht nicht mehr zusätzlich verbunden werden.

Es ist von Vorteil, dass ein zweiter Haltebereich mit einer in der Ebenen des Rahmens verbreiterten Rahmenstruktur vorliegt. Dieser zweite Haltebereich wird in einer Umgreifung des Fahrzeugbauteils eingebracht.

Vorteilhafterweise ist der erste Haltebereich so ausgestaltet, dass er sich bis zu einem Winkel von 90° entlang einer bogenförmigen Kontur des Fahrzeugbauteils erstreckt.

Es ist von Vorteil, wenn der zweite Haltebereich sich als Nasen bis zur Hälfte entlang einer Seite des Rahmens des Halters erstreckt.

Die erfindungsgemäße Lösung ist vor allem für eine Kennzeichenleuchte optimal.

Die Aufgabe wird weiterhin gelöst mit einem Verfahren zur Montage eines Fahrzeugbauteils mit Leuchteneinschub wobei,
- der Leuchteneinschub entlang einer ersten Achse auf die Ausnehmung im Fahrzeugbauteil zu bewegt wird,
- und dann in einer zweiten Richtung senkrecht dazu abgesenkt wird,
- und abschließend wieder durch ein Verschieben entlang der ersten Achse festgelegt wird.
Das Verfahren ist insofern vorteilhaft, indem durch den letzten Verfahrensschritt, das erste Haltelement zum Anliegen am Fahrzeugbauteil kommt und das zweite Haltelement unter eine Umgreifung am Fahrzeugbauteil angelegt wird.

### Beschreibung der Erfindung

Die Erfindung wird nachfolgend beispielhaft unter Bezugnahme auf die beigefügte Zeichnung beschrieben.
- Fig. 1: zeigt eine schematische Darstellung der beispielhaften Ausführungsform mit den Hauptkomponenten,
- Fig. 2: zeigt die Ausführungsform im Zusammenbau entlang einer Schnittachse A-A,
- Fig. 3: zeigt eine Aufsicht entlang der x-Achse von unten,
- Fig. 4: zeigt eine Schnittbild entlang B-B.

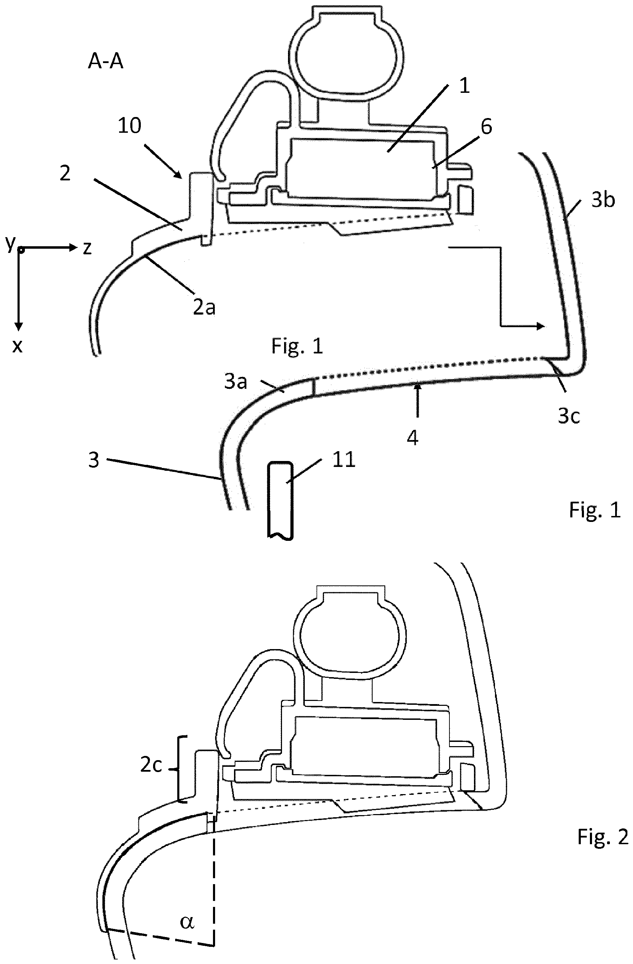

Figur 1 zeigt einen Leuchteneinschub 10 und einen Ausschnitt aus einem Fahrzeugbauteil 3.
Das Fahrzeugbauteil 3 stellt dabei einen Bereich des Heckmoduls eines Fahrzeugs dar, wobei eine überhängende Struktur als Karosseriemulde ausgebildet ist. Die Kontur 3a des Fahrzeugbauteils 3 verläuft in x-Richtung nach unten und bildet die Fläche zur Montage eines Kennzeichens 11 aus. Der Bereich 3b erstreckt sich nach oben in Richtung einer Heckklappe oder eines Kofferraums oder ist Teil einer Heckklappe.
Eine Ausnehmung 4 ist im überhängenden Bereich ausgebildet und dient zur Aufnahme des Leuchteneinschubs 10.
Die vordere Kante 3c des Fahrzeugbauteils 3 im Bereich der Ausnehmung 4 verläuft schräg nach aussen.

Die Leuchte 1, beispielsweise eine Kennzeichenleuchte, weist ein Gehäuse 6 auf, in dem eine oder mehrere Lichtquellen, beispielsweise LEDs angeordnet sind. Das Gehäuse 6 ist auf einer dem Kennzeichenschild 11 zugewandten Seite mit einer transparenten Lichtscheibe abgedeckt.
Die Leuchte 1 ist an einem Halter 2 vormontiert und bildet den Leuchteneinschub 10 aus. Die Leuchte 1 sitzt mit ihrem Gehäuse 6 in einer rahmenartigen Aufnahme des Halters 2, der das Gehäuse 6 der Leuchte 1 im Aufnahmebereich 2c von allen Seiten umgibt.

Der Rahmen 5 des Halters 2 zeigt zwei Haltebereiche. Der erste Haltebereich 2a erstreckt sich aus der Ebenen der Rahmens 5 des Halters 2 heraus und bildet eine Anlagefläche aus, die zur Anlage am Fahrzeugbauteil 3 entlang der Kontur 3a bestimmt ist.

Dieser erste Haltebereich 2a ist bei wie einen Zunge ausgebildet, die einen Erstreckung in der y-Richtung aufweist, die die gesamte Breite des Halters 2 umfassen kann. Es ist aber auch sinnvoll den ersten Haltebereich 2a nur mittig und in verkürzter Länge auszugestalten.
Der Haltebereich 2a umfasst die gebogenen Kontur 3a des Fahrzeugbauteils 3 dabei bis zu einem Winkel von 90°, so dass eine sehr sicher Anlage am Fahrzeugbauteil 3 erfolgt, die nicht in z -Richtung verschoben werden kann.

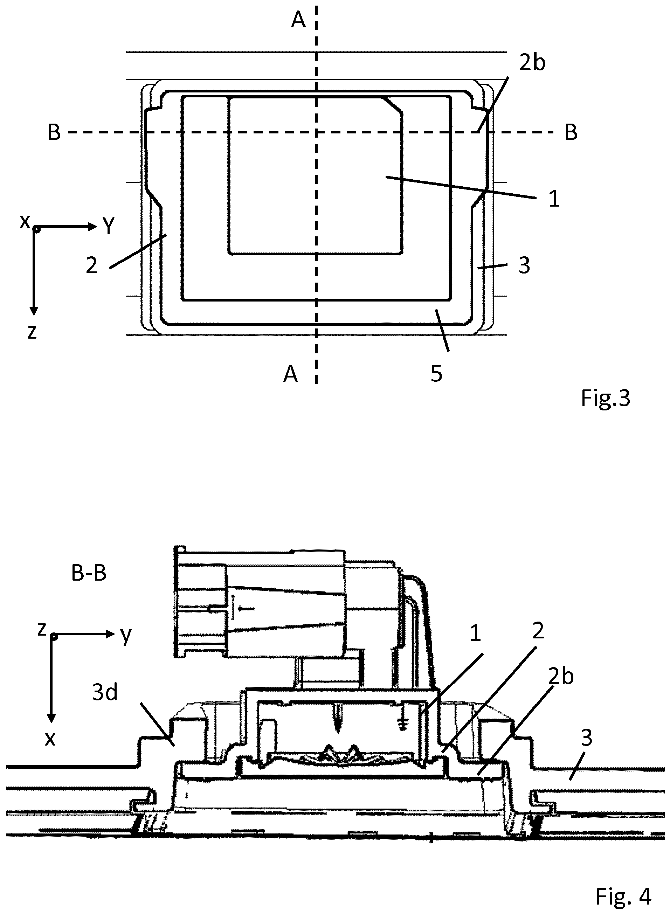

Figur 2 zeigt den Leuchteneinschub 10 nach der Montage, wobei einerseits der erste Haltebereich 2a vollständig an der Kontur 3a anliegt, sowie der zweite Haltebereich 2b, wie in Figur 3 zu erkennen, am Fahrzeugbauteil 3 abschließt.
In dieser Aufsicht von unten auf die Kennzeichenleuchte ist die Leuchte 1 in der Mitte dezentral angeordnet und wobei der Rahmen 5 des Halters 2 die Leuchte auf allen Seiten umgibt. Der Rahmen 5 des Halters sitzt im Fahrzeugbauteil 3.

Der zweite Haltebereich 2b ist als Nase aus dem rahmenartigen Bereich des Halters 2 ausgebildet, wobei eine größere Breite in y-Richtung gegenüber dem Rest des Rahmens 5 ausgebildet ist. Die Erstreckung der Nasen ist im Ausführungsbeispiel etwas weniger als die Hälfte der gesamten Rahmenlänge in z-Richtung.

In Figur 4 ist zu erkennen, dass der zweite Haltebereich 2b des Halters 2 vom Fahrzeugbauteil 3 umgriffen ist. Das Fahrzeugbauteil 3 weist dazu mindestens im Bereich der zweiten Haltelemente 2b einen treppenförmige Verdickung 3d auf, an der die zweiten Haltelemente 2b zur Anlage kommen.

Um den vormontierten Leuchteneinschub 10 oder einen entsprechenden einteiligen Leuchteneinschub 10 zu montieren, wird der Leuchteneinschub 10 zunächst in z-Richtung auf das Fahrzeugbauteil 3 zu bewegt. Danach wird der Leuchteneinschub 10 entlang der x-Achse nach unten verschoben bis der Halter 2 bereits in die Ausnehmung 4 des Fahrzeugbauteils 3 ragt. Im letzten Schritt wird der Leuchteneinschub 10 wieder in die z-Richtung verschoben, wobei gleichzeitig das erste Haleelement 2a in Anlage zur Kontur 3a des Fahrzeugteils 3 kommt und der zweite Haltebereich in die Umgreifung, der treppenartigen Verdickung 3d, des Fahrzeugbauteils 3 eingreift.

Ein Lösen des Leuchteneinschubs 10 ist damit nicht mehr einfach möglich, da das erste Haltelement 2a die z-Richtung sichert, während das zweite Haltelement 2b in x- und y-Richtung verriegelt.

### Bezugszeichenliste

- 1: Leuchte
- 2: Halter
- 2a: erster Haltebereich
- 2b: zweiter Haltebereich
- 2c: Aufnahmebereich
- 3: Fahrzeugbauteil
- 3a: Kontur
- 3b: Bereich
- 3c: Kante
- 3d: treppenartige Verdickung
- 4: Ausnehmung
- 5: Rahmen
- 6: Gehäuse
- 10: Leuchteneinschub
- 11: Kennzeichen

## Patentansprüche

1. Fahrzeugbauteil (3) mit Leuchteneinschub (10), wobei das Fahrzeugteil (3) eine Ausnehmung (4) und der Leuchteneinschub (10) eine Leuchte und einen Halter (2) aufweist, wobei der Halter (2) in die Ausnehmung des Fahrzeugteils eingepasst wird, **dadurch gekennzeichnet, dass** der Halter (2) einen Rahmen (5) mit zwei Haltebereichen (2a, 2b) besitzt, wobei der erste Haltebereich (2a) sich aus der Ebene des Rahmens (5) heraus erstreckt und der Kontur (3a) des benachbarten Fahrzeugbauteils (3) folgt, wobei der erste Haltebereich (2a) die gebogenen Kontur (3a) des Fahrzeugbauteils (3) umfasst und der zweite Haltebereich (2b) sich als Nasen bis zur Hälfte entlang einer Seite des Rahmens (5) des Halters (2) erstreckt..

2. Fahrzeugbauteil (3) mit Leuchteneinschub (10) nach Anspruch 1, **dadurch gekennzeichnet, dass** ein zweiter Haltebereich (2b) mit einer in der Ebenen des Rahmens (5) verbreiterten Rahmenstruktur vorliegt.

3. Fahrzeugbauteil (3) mit Leuchteneinschub (10) nach Anspruch 1 oder 2, **dadurch gekennzeichnet, dass** der erste Haltebereich (2a) sich bis zu einem Winkel von 90° entlang einer bogenförmigen Kontur (3a) erstreckt.

4. Fahrzeugbauteil (3) mit Leuchteneinschub (10) nach einem der vorgehenden Ansprüchen, **dadurch gekennzeichnet, dass** der Leuchteneinschub (10) eine Kennzeichenleuchte darstellt.

5. Verfahren zur Montage eines Fahrzeugbauteils (3) mit Leuchteneinschub (10) nach einem der vorgehenden Ansprüchen, **dadurch gekennzeichnet, dass**
- der Leuchteneinschub (10) entlang einer ersten Achse auf die Ausnehmung (4) im Fahrzeugbauteil (3) zu bewegt wird,
- und dann in einer zweiten Richtung senkrecht dazu abgesenkt wird,
- und abschließend wieder durch ein Verschieben entlang der ersten Achse festgelegt wird.

6. Verfahren zur Montage eines Fahrzeugbauteils (3) mit Leuchteneinschub (10) nach Anspruch 6, wobei durch den letzten Verfahrensschritt, das erste Haltelement (2a) zum Anliegen am Fahrzeugbauteil (3) kommt und das zweite Haltelement (2b) unter eine Umgreifung am Fahrzeugbauteil (3) angelegt wird.
